# EUROPEAN PATENT SPECIFICATION

(11) **EP 0 266 876 B1**
(45) Date of publication and mention of the grant of the patent: **19.05.1993**
(21) Application number: 87307980.0
(22) Date of filing: 09.09.1987
(51) Int. Cl.: B32B 27/32

(54) **Multilayer polyethylene articles**
Mehrschichtige Gegenstände aus Polyäthylen
Articles multicouches en polyéthylène

(30) Priority: 03.11.1986 US 926257
(43) Date of publication of application: 11.05.1988
(73) Proprietor: OWENS-ILLINOIS PLASTIC PRODUCTS INC., Toledo, Ohio 43666 (US)
(72) Inventor: Jabarin, Saleh Abd-El-Karim, Holland Ohio 43528 (US)
(74) Representative: McCall, John Douglas

(56) References cited:
- WO-A-86/02044
- GB-A- 1 590 588
- US-A- 4 022 646

## Description

Articles fabricated from polyethylene polymers, particularly high density polyethylene polymers, are widely accepted in the marketplace for a variety of uses. One such use is the provision of containers fabricated from high density polyethylene, which are used to contain such materials as household cleaners and bleach. Unfortunately, such materials, particularly household bleach, are very corrosive and generally result in environmental stress-cracking of most high density polyethylene resins and thereby degrade the package. This results in the use of specialized, costly high density polyethylene resins for use in such packages.

For this reason, there is a need in the art for an improved polyethylene structure which is particularly well-suited to the fabrication of containers for bleach, which polyethylene structure is resistant to environmental stress-cracking, has good stiffness and top load characteristics for fabrication into containers, is lightweight and is low in cost compared to conventional polyethylene structures.

It has now been found possible to provide containers for highly stress-crack inducing liquids, which show significant resistance to environmental stress-cracking upon exposure to materials like household bleach as well as good stiffness and top load characteristics. The multilayer polyethylene structures used in the containers of the present invention are intimate laminates of a plurality of layers of different high density polyethylene plastics of defined densities and melt indexes, which laminates can be easily formed by conventional extrusion blow moulding technology.

In US-A- 4 022 646 there is disclosed a process for the manufacture, by simultaneous orientation and lamination, of oriented ethylene polymer films which comprises the steps of (1) bringing together in face-to-face engagement at least one (first) ethylene polymer film, particularly a high density (0.950 to 0.960 g/cc) ethylene polymer, with at least one other (second) ethylene polymer film, particularly a low to medium density (0.910 to 0.945 g/cc) ethylene polymer, and (2) while maintaining the films in face-to-face engagement, orienting the films at a temperature below the melting point of the polymer of the first film, the polymer of the first film being of higher melting point than the polymer of the second film.

In GB-A- 1590588 there is disclosed a stock material comprising (a) a substrate layer formed from a thermoplastic polymer material having a specific gravity within the approximate range of from 0.95 to 0.965, and also having a first predetermined softening point on a specific range of thickness, and (b) at least one outer layer of a thermoplastic polymer material on a side of the substrate layer, the material of each outside layer having a specific gravity within the approximate range of 0.918 to 0.930, and a second predetermined softening point which is lower than the first softening point. It is necessary that each outer layer has a thickness within the approximate range of from 5% to 15% of the thickness of the substrate layer, that the total thickness of the substrate layer and outer layer or layers be within the approximate range of 0.381 to 0.635 mm (15 to 25 mils), and that the differences between the softening points and the thicknesses of the substrate and each outer layer is selected to permit dynamic heating of an unconfined portion of material of each outer layer to render the portions sufficiently molten for heat-sealing while assuring substantially insensitivity thermally of the substrate to such heating. Mention is made of addition of trim waste or scrap to the plastics supply for substrate or outer layers under certain conditions.

In GB-A- 1590588 there is also disclosed a method of making a container, particularly a milk container, which comprises cutting and scoring a sheet of the stock material to form a container blank; passing unconfined portions of the composite container blank through an open flame, the flame impinging on the unconfined portions, thereby heating the outer layers, by said flame, to a molten condition, for heat-sealing, while the substrate layer remains substantially insensitive thermally to the heat and structurally supports the tacky outer layers in an undistorted condition; and joining tacky portions of the composite container blank.

According to a first embodiment of the present invention there is provided a blow molded container formed from a multilayer polyethylene structure which comprises at least a first and a second layer of high density polyethylene wherein
the first layer comprises 70 to 90 weight percent of the structure and includes a high density polyethylene having a density of at least 0.959 g/cc and a melt index of 10.0 grams per ten minutes or less, and
the second layer comprises 10 to 30 weight percent of the structure and including a high density polyethylene having a density of 0.951 to less than 0.959 g/cc and a melt index of ten grams per ten minutes or less.

According to a second embodiment of the present invention there is provided a blow molded container formed from a multilayer polyethylene structure which comprises at least a first and a second layer of high density polyethylene wherein,
the first layer comprises 70 to 90 weight percent of the structure and is composed of
(a) 60 to 80 weight percent of high density polyethylene having a density of at least 0.959 g/cc and a melt index of ten grams per ten minutes or less and
(b) 20 to 40 weight percent of a blended high density polyethylene material including (1) 70 to 90 weight percent of high density polyethylene having a density of at least 0.959 g/cc and a melt index of about ten grams per ten minutes or less and (2) 10 to 30 weight percent of a high density polyethylene having a density of 0.951 to less than 0.959 g/cc and a melt index of ten grams per ten minutes or less; and
the second layer comprises 10 to 30 weight percent of the structure and is composed of high density polyethylene having a density of 0.951 to less than 0.959 g/cc and a melt index of ten grams per ten minutes or less.

According to a third embodiment of the present invention there is provided a blow molded container formed from a multilayer polyethylene structure which comprises a first and a second layer of high density polyethylene wherein
the first layer comprises 70 to 90 weight percent of the structure and also comprises a high density polyethylene having a density of at least 0.959 g/cc and a melt index of 10 grams per 10 minutes or less, and the second layer comprises 10 to 30 weight percent of the structure and also comprises a blend of (a) 60 to 80 weight percent of a high density polyethylene having a density of at least 0.959 g/cc and a melt index of 10 minutes or less, and (b) 20 to 40 weight percent of a high density polyethylene having a density of 0.951 to less than 0.959 g/cc and a melt index of 10 grams per 10 minutes or less.

The first layer, typically the outer non-product contacting layer, contains generally 70 to 90 weight percent and optimally about 80 weight percent of the structure. The high density polyethylene having a density of at least 0.959 g/cc in the first layer preferably has a density of 0.959 to 0.965 g/cc, more preferably 0.959 or 0.960 to 0.963 or 0.964 g/cc.

This first layer of the laminate provides good stiffness and top load characteristics to the structure as fabricated into containers of the present invention.

The second layer, which typically forms the inner product contact layer, contains generally 10 to 30 and optimally about 20 weight percent of the structure.

The high density polyethylene having a density of 0.951 to less than 0.959 g/cc in the second layer preferably has a density of 0.951 to 0.956 or 0.957 or even 0.958 g/cc, preferably 0.952 to 0.954 or 0.955 g/cc.

The second layer of the laminate provides excellent environmental stress-crack resistance when used as a product contacting inner layer when the structure is fabricated into the container of the present invention for bleach and the like.

The multilayer polyethylene structure can be formed by hot melt coextrusion techniques.

The second embodiment of the present invention, which uses a blended first layer as set forth above, allows for the maximum utilization of scrap material. Such scrap is typically generated when extrusion blow molded containers are formed. The scrap is recycled into the first layer, for instance, preferably as an addition of about 30 weight percent to a virgin high density polyethylene which comprises about 70 weight percent of the first layer. It has been discovered that the scrap material can be included without significant adverse effect on the overall container performance and particularly its inclusion does not degrade the performance characteristics of the container. Waste is thereby minimized without sacrificing the envrionmental stress-crack resistance or stiffness (and thus top-load) of containers formed from the multilayer structure.

The preferred amount of 30 weight percent blended high density polyethylene material used in the first layer can be derived from container scrap which is generated during normal extrusion blow molding of container structures and is used to increase manufacturing efficiencies without adversely affecting the properties of the container.

The containers fabricated from the laminate structures of the present invention are lighter in weight than prior art containers and thus less costly, show no significant reduction in required performance properties and can accommodate the inclusion of manufacturing scrap for maximum economic benefit.

For the structure of the first embodiment of the present invention, the high density polyethylene in both layers may be filled with conventional fillers, preferably stiffness-enhancing fillers like calcium carbonate. Alternatively and less preferably, other conventional non-stiffening fillers, such as titanium dioxide, may be used.

A preferred high density polyethylene material having a density of at least 0.959g/cc for use in the first, or outside layer, is one manufactured by Phillips Chemical Company, a subsidiary of Phillips Petroleum Company, and sold under the product designation EHM 6003. This material has the following physical characteristics which are exemplary of a preferred material for the first layer.

A density under ASTM D1505 of 0.963 g/cc; a melt index under ASTM D1238 (2.16 kg) of 0.3 gram per ten minutes; an environmental stress-cracking resistance under condition A, ASTM D1693 under F-50,H test of between about 15 and 20; a tensile strength at yield, under 5.08 cm (two inches) per minute rate under ASTM D638 of 3.587 x 10⁶ N/M² (4400 psi); and elongation, at 5.08 cm (two inches) per minute, under ASTM D638 of at least 600 percent; and a flexural modulus under ASTM D790 of 1.957 x 10⁵ N/M² (240 M psi).

Other suitable materials are commercially available but the above-referred to resin is preferred according to the present invention.

A preferred high density polyethylene material having a density of 0.951 to less than 0.959 g/cc and a melt index of ten grams per ten minutes or less for use in the second, or inside layer, a preferred material is manufactured by the USI Chemicals, subsidiary of National Distillers & Chemical Corporation and marketed under the product designation LC732 having the following physical properties:

A density under ASTM D1505 of 0.953 g/cc; a melt index of 0.28 gram per ten minutes under ASTM D1238, a tensile strength of 2.919x10⁶ N/m² (3850 psi) under ASTM D628 Type 4 specimen at 5.08 cm (two inches) per minute; an elongation at break point of 850 percent under ASTM D638 at 5.08 cm (two inches) per minute; a flexural stiffness of 9.783x10⁷ N/M² (120,000 psi) under ASTM 747; a torsional stiffness of 8.967x10⁷ N/M² (110,000 psi) under ASTM D1043; a one percent secant modulus of 9.375x10⁷ N/M² (115,000 psi) under ASTM D638; a Vicat softening point of 126°C. under ASTM 1525 and a low temperature brittleness (F-50) of -76°C as measured by ASTM D746.

The USI material designated by the tradename LC732 shows a good flow rate, acceptable stiffness and very good environmental stress-crack resistance and can be cast into containers comprising the multilayer high density polyethylene structures using conventional extrusion blow molding technology.

Obviously, other commercial materials are available which would be suitable but the above described USI high density polyethylene is preferred due to its excellent environmental stress-crack resistance good flow characteristics and ability to be laminated to the first layer.

Similarly, the above-referred to Phillips Chemical Company high density polyethylene, when used according to the present invention, has shown excellent stiffness when laminated to the stress-crack resistance layer of the high density polyethylene having a density of 0.951 to less than 0.959 g/cc.

Obviously, since the multilayer structures are, according to the present invention, fabricated into containers for holding such stress-crack inducing materials as household bleach and cleaners, it is of course preferred that the second layer of the environmentally stress-crack resistant high density polyethylene of density of 0.951 to less than 0.959 g/cc be on the inside product contacting layer with the stiffness enhancing first layer weight portion of the multi-layer structure of density of at least 0.959 g/cc on the exterior surface.

Most preferably, the second or inner layer of material, which comprises preferably about 20 weight percent of the structure, will have a density in the range of as low as 0.940 up to 0.957 or 0.958.

The following Examples are set forth to illustrate the principle in practice of the present invention to those skilled in the art and specifically to illustrate the significantly improved weight and performance characteristics of the multilayer high density polyethylene structure in containers prepared according to the present invention when compared to high density polyethylene monolithic containers formed by identical extrustion blow molding technology.

Monolayer (prior art) and colayer container (made according to the invention) tests and evaluations were conducted. The tests were carried out on a CE-4 type (wheel type) high speed continuous extrusion blow molding machine equipped with dual extruders. The dual extruders fed a colayer head designed to deliver two distinct, separate layers of polyethylene, fusing these layers together into a single parison. This parison was blow molded into 128 fluid oz (3785 cm³) handled containers weighing approximately 98 grams each.

The tests demonstrated the lightweighting capability of a colayer system whose exterior layer is made up of a high density polyethylene with a density of at least 0.959 g/cc and a melt index of 10 grams per ten minutes or less, and whose interior layer is made up of a high density polyethylene with a density of 0.951 to less than 0.959 g/cc and a melt index of 10 grams per ten minutes or less. The exterior layer provides good stiffness and top load characteristics while the interior provides excellent environmental stress-crack resistance when the above structures are combined and fabricated into containers for bleach or other conventional household and chemical products.

The monolayer (prior art) and colayer containers were subjected to physical performance, mechanical performance and environmental stress-crack resistance, with the following results:
1. The colayer containers exhibited a 8.36% improvement in vertical load (top load) performance over the monolayer (prior art) container system. This was supported by a 16.7% increase in flexural stiffness over the monolayer container system.
2. Even though 80% of the colayer container system was made up of a high density polyethylene with a density of at least 0.959 g/cc, the containers still maintained equivalent impact resistance as the monolayer container system which was made up of high density polyethylene with a density of 0.951 to less than 0.959 g/cc.
3. The colayer container system which employed a high density polyethylene with a density of 0.951 to less than 0.959 g/cc at 20% of the container weight for stress-crack resistance equivalent to the monolayer system employing 100% of the high density of 0.051 to less than 0.959 grams per cubic centimetre.

The results indicate that an 8% lightweighting capability of the colayer system over the monolayer system can be achieved, while still maintaining the required physical performance and stress crack-resistance of a monolayer container manufactured from high density polyethylene with a density of at least 0.959 g/cc, at conventional container gram weights.

The detailed results are shown in the Tables that follow:

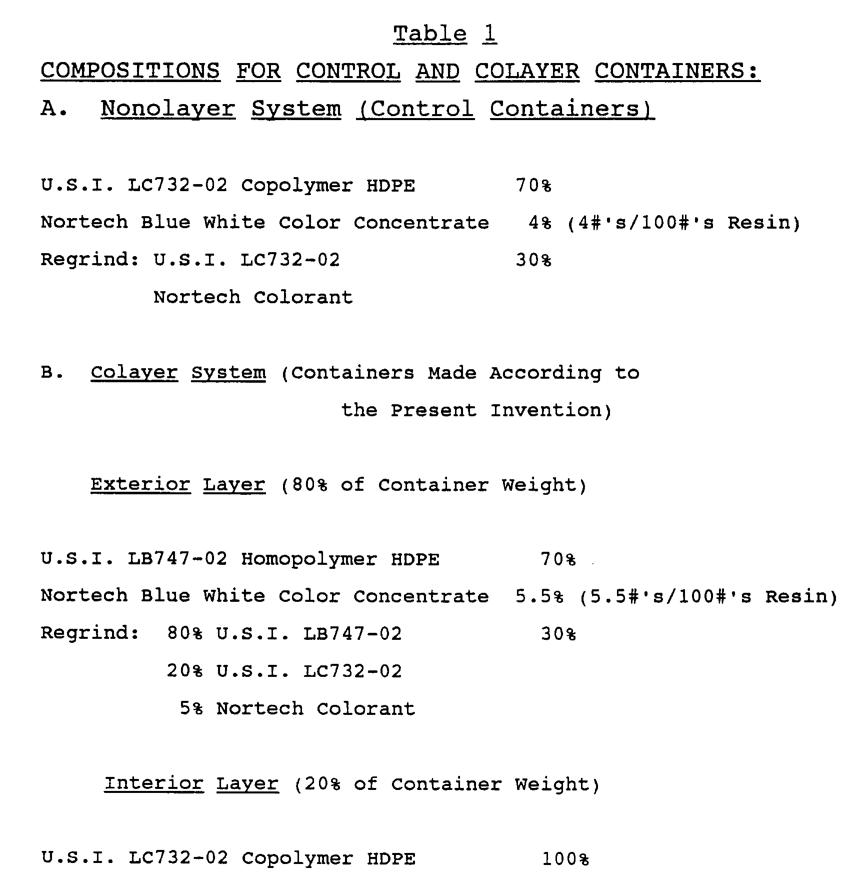

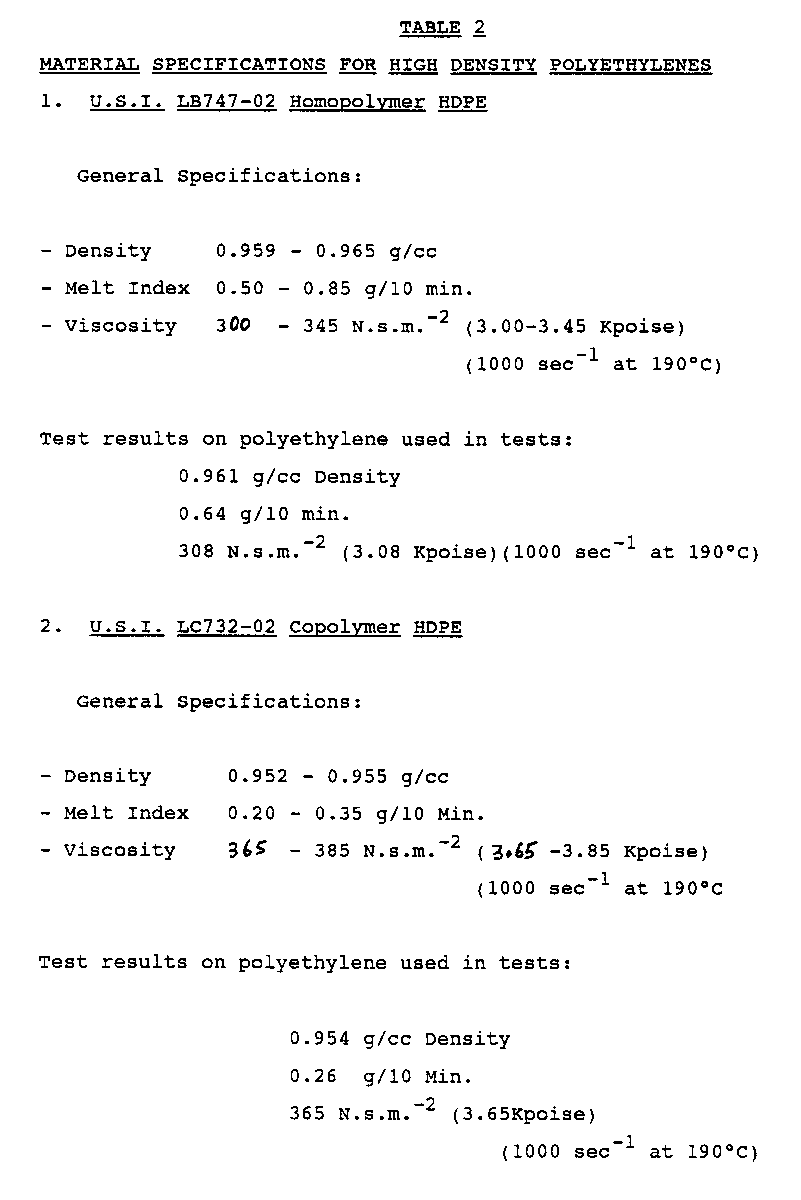

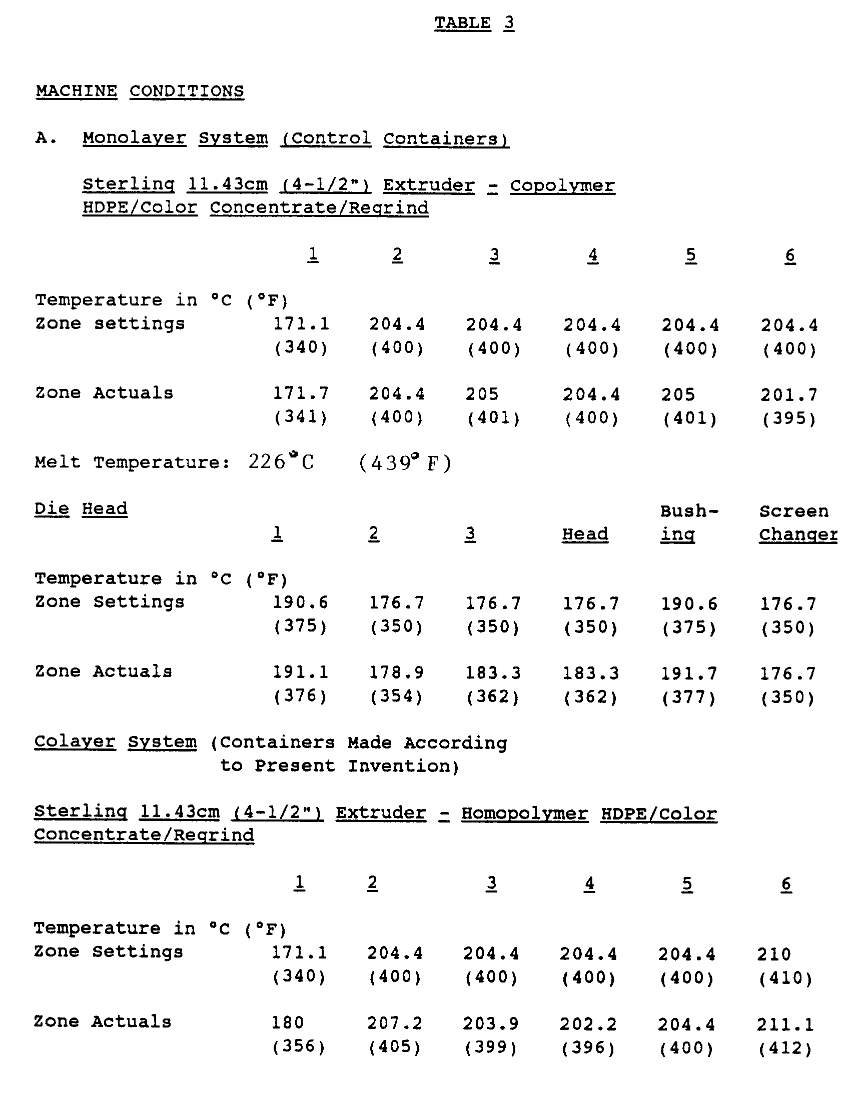

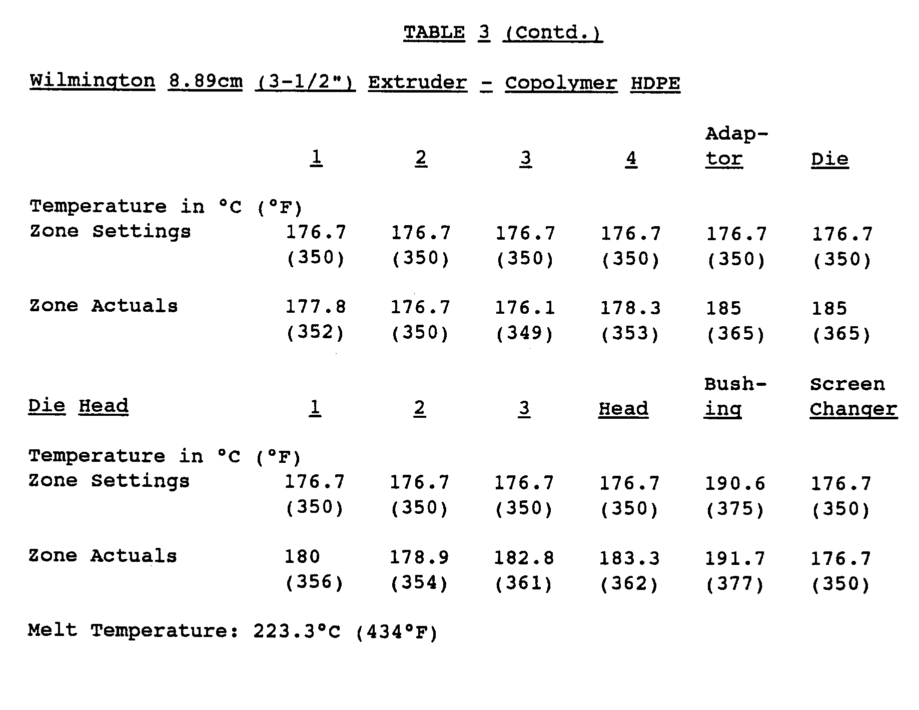

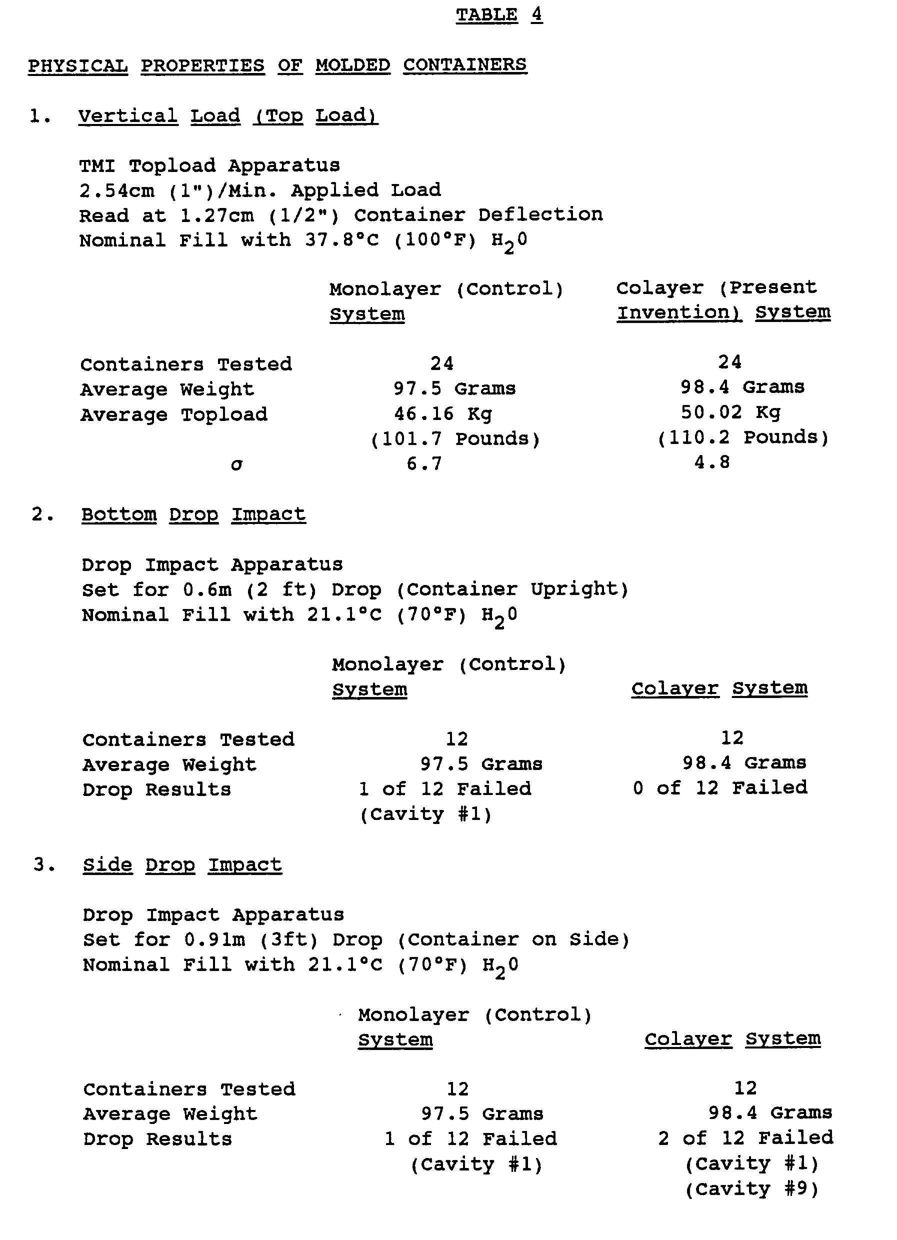

**TABLE 5**

| MECHANICAL PROPERTIES OF MOLDED CONTAINERS | | | | |
|---|---|---|---|---|
| | Monolayer (Control) System | | Colayer (Present Invention) System | |
| | Axial | Hoop | Axial | Hoop |
| Elastic Modulus, x in N/m² (1000 psi) | 9.37x10⁷ | 9.70x10⁷ | 1.02x10⁸ | 1.13x10⁸ |
| | (115) | (119) | (125) | (140) |
| % σ | 19 | 12 | 9 | 16 |
| Yield Stress, x in N/m² (1000 psi) | 3.10x10⁶ | 3.10x10⁶ | 3.09x10⁶ | 3.5x10⁸ |
| | (3.8) | (3.8) | (3.8) | (4.3) |
| % σ | 0.5 | 0.6 | 0.2 | 0.6 |
| Yield Strain, x in N/m² (1000 psi) | 7.09x10⁶ | 6.60x10⁶ | 6.6x10⁶ | 6.20x10⁶ |
| | (8.7) | (8.1) | (8.7) | (7.6) |
| % σ | 0.3 | 0.2 | 0.5 | 0.1 |
| Ultimate Strength, x in N/m² (1000 psi) | 4.97x10⁶ | 5.05x10⁶ | 4.40x10⁶ | 4.57x10⁶ |
| | (6.1) | (6.2) | (5.4) | (5.6) |
| % σ | 0.4 | 0.8 | 0.3 | 0.8 |
| Ultimate Elongation x in N/m² (1000 psi) | 5.98x10⁸ | 5.93x10⁸ | 6.29x10⁸ | 6.07x10⁸ |
| | (734) | (728) | (772) | (745) |
| % σ | 34 | 29 | 42 | 57 |
| Flexural Stiffness, x in N/m² (1000 psi) | 7.34x10⁷ | -- | 8.56x10⁷ | -- |
| | (90) | -- | (105) | -- |
| % σ | 4 | -- | 4 | -- |

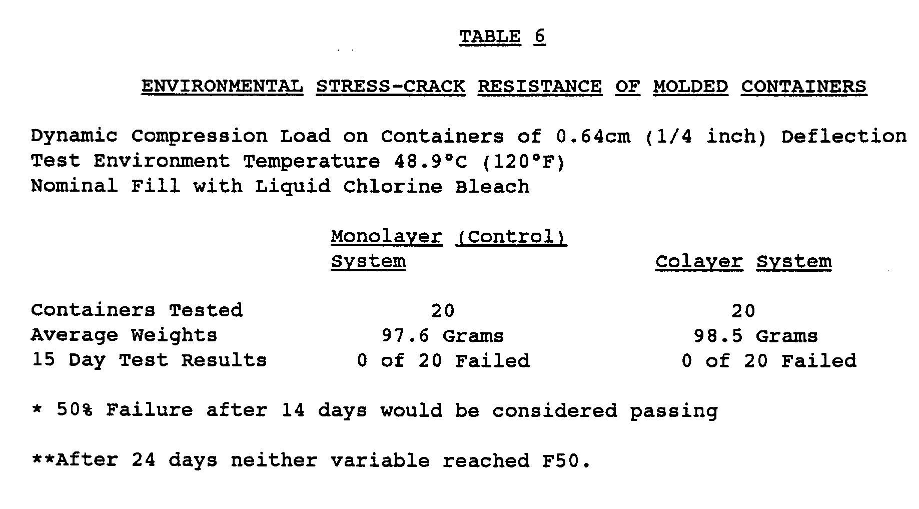

## Claims

1. A blow molded container formed from a multilayer polyethylene structure which comprises at least a first and a second layer of high density polyethylene wherein
the first layer comprises 70 to 90 weight percent of the structure and includes a high density polyethylene having a density of at least 0.959 g/cc and a melt index of 10.0 grams per ten minutes or less, and
the second layer comprises 10 to 30 weight percent of the structure and including a high density polyethylene having a density of 0.951 to less than 0.959 g/cc and a melt index of ten grams per ten minutes or less.

2. A blow molded container formed from a multilayer polyethylene structure which comprises at least a first and a second layer of high density polyethylene wherein,
the first layer comprises 70 to 90 weight percent of the structure and is composed of
(a) 60 to 80 weight percent of high density polyethylene having a density of at least 0.959 g/cc and a melt index of ten grams per ten minutes or less and
(b) 20 to 40 weight percent of a blended high density polyethylene material including (1) 70 to 90 weight percent of high density polyethylene having a density of at least 0.959 g/cc and a melt index of about ten grams per ten minutes or less and (2) 10 to 30 weight percent of a high density polyethylene having a density of 0.951 to less than 0.959 g/cc and a melt index of ten grams per ten minutes or less; and
the second layer comprises 10 to 30 weight percent of the structure and is composed of high density polyethylene having a density of 0.951 to less than 0.959 g/cc and a melt index of ten grams per ten minutes or less.

3. A blow molded container according to claim 2, wherein
the first layer is composed of (a) about 70 percent of high density polyethylene having a density of at least 0.959 g/cc and a melt index of 10 grams per ten minutes or less and (b) about 30 percent of a blended high density polyethylene material including (1) about 80 weight percent of high density polyethylene having a density of at least 0.959 g/cc and a melt index of ten grams per ten minutes or less and (2) 20 weight percent of a high density polyethylene having a density less than 0.959 g/cc and a melt index of ten grams per ten minutes or less; and
the second layer is composed of high density polyethylene having a density 0.951 to less than 0.959 g/cc and a melt index of ten grams per ten minutes or less.

4. A blow molded container according to any of claims 1 to 3, wherein the first layer comprises about 80 weight percent of the structure and the second layer comprises about 20 weight percent of the structure.

5. A blow molded container formed from a multilayer polyethylene structure which comprises a first and a second layer of high density polyethylene wherein
the first layer comprises 70 to 90 weight percent of the structure and also comprises a high density polyethylene having a density of at least 0.959 g/cc and a melt index of 10 grams per 10 minutes or less, and
the second layer comprises 10 to 30 weight percent of the structure and also comprises a blend of (a) 60 to 80 weight percent of a high density polyethylene having a density of at least 0.959 g/cc and a melt index of 10 minutes or less, and (b) 20 to 40 weight percent of a high density polyethylene having a density of 0.951 to less than 0.959 g/cc and a melt index of 10 grams per 10 minutes or less.

6. A blow molded container according to any of claims 1 to 5, wherein the high density polyethylene having a density of at least 0.959 g/cc has a density of 0.959 to 0.965 g/cc.

7. A blow molded container according to any of claims 1 to 6, wherein the high density polyethylene having a density of 0.951 to less than 0.959 g/cc has a density of 0.952 to 0.955 g/cc.

8. A blow molded container according to any of claims 1 to 7, wherein the polyethylene having a density of at least 0.959 g/cc has a density of about 0.963 g/cc and a melt index of about 0.3 grams per 10 minutes, and the polyethylene having a density of 0.951 to less than 0.959 g/cc has a density of about 0.953 g/cc and a melt index of about 0.28 gram per 10 minutes.

9. A container according to any of claims 1 to 7, which is a bleach container or a household cleaner container.

## Patentansprüche

1. Blasgeformter Behälter, gebildet aus einer vielschichtigen Polyethylenstruktur, die mindestens eine erste und eine zweite Schicht aus hochdichtem Polyethylen enthält, wobei
die erste Schicht 70 bis 90 Gew.% der Struktur ausmacht und ein hochdichtes Polyethylen umfaßt, welches eine Dichte von mindestens 0,959 g/cm³ und einen Schmelzindex von 10,0 g pro 10 Minuten oder weniger aufweist, und
die zweite Schicht 10 bis 30 Gew.% der Struktur ausmacht und ein hochdichtes Polyethylen mit einer Dichte von 0,951 bis weniger als 0,959 g/cm³ umfaßt und einen Schmelzindex von 10 g pro 10 Minuten oder weniger aufweist.

2. Blasgeformter Behälter, gebildet aus einer vielschichtigen Polyethylenstruktur, die mindestens eine erste und eine zweite Schicht aus hochdichtem Polyethylen aufweist, wobei
die erste Schicht 70 bis 90 Gew.% der Struktur ausmacht und zusammengesetzt ist aus
(a) 60 bis 80 Gew.% hochdichtem Polyethylen mit einer Dichte von mindestens 0,959 g/cm³ und einem Schmelzindex von 10 g pro 10 Minuten oder weniger und
(b) 20 bis 40 Gew.% eines gemischten, hochdichten Polyethylen-Materials einschließlich
(1) 70 bis 90 Gew.% hochdichten Polyethylens mit einer Dichte von mindestens 0,959 g/cm³ und einem Schmelzindex von ungefähr 10 g pro 10 Minuten oder weniger und
(2) 10 bis 30 Gew.% eines hochdichten Polyethylens mit einer Dichte von 0,951 bis weniger als 0,959 g/cm³ und einem Schmelzindex von 10 g pro 10 Minuten oder weniger und
die zweite Schicht 10 bis 30 Gew.% der Struktur ausmacht und zusammengesetzt ist aus hochdichtem Polyethylen mit einer Dichte von 0,951 bis weniger als 0,959 g/cm³ und einem Schmelzindex von 10 g pro 10 Minuten oder weniger.

3. Blasgeformter Behälter nach Anspruch 2,
dadurch gekennzeichnet, daß die erste Schicht zusammengesetzt ist aus
(a) ungefähr 70 % hochdichtem Polyethylen mit einer Dichte von mindestens 0,959 g/cm³ und einem Schmelzindex von 10 g pro 10 Minuten oder weniger und
(b) ungefähr 30 % eines gemischten hochdichten Polyethylen-Materials einschließlich
(1) ungefähr 80 Gew.% hochdichten Polyethylens mit einer Dichte von mindestens 0,959 g/cm³ und einem Schmelzindex von 10 g pro 10 Minuten oder weniger und
(2) 20 Gew.% eines hochdichten Polyethylens mit einer Dichte von weniger als 0,959 g/cm³ und einem Schmelzindex von 10 g pro 10 Minuten oder weniger und
die zweite Schicht aus hochdichtem Polyethylen mit einer Dichte von 0,951 bis 0,959 g/cm³ und einem Schmelzindex von 10 g pro 10 Minunten oder weniger zusammengesetzt ist.

4. Blasgeformter Behälter nach einem der Ansprüche 1 bis 3,
dadurch gekennzeichnet, daß die erste Schicht ungefähr 80 Gew.% der Struktur aufweist und die zweite Schicht ungefähr 20 Gew.% der Stuktur umfaßt.

5. Blasgeformter Behälter, gebildet aus einer vielschichtigen Polyethylen-Struktur, die eine erste und eine zweite Schicht aus hochdichtem Polyethylen umfaßt, wobei
die erste Schicht 70 bis 90 Gew.% der Struktur ausmacht und ein hochdichtes Polyethylen mit einer Dichte von mindestens 0,959 g/cm³ und einem Schmelzindex von 10 g pro 10 Minuten oder weniger aufweist und
die zweite Schicht 10 bis 30 Gew.% der Struktur ausmacht und eine Mischung von
(a) 60 bis 80 Gew.% eines hochdichten Polyethylens mit einer Dichte von mindestens 0,959 g/cm³ und einem Schmelzindex von 10 g oder weniger aufweist und
(b) 20 bis 40 Gew.% eines hochdichten Polyethylens mit einer Dichte von 0,951 bis weniger als 0,959 g/cm³ und einem Schmelzindex von 10 g pro 10 Minuten oder weniger aufweist.

6. Blasgeformter Behälter nach einem der Ansprüche 1 bis 5,
dadurch gekennzeichnet, daß das hochdichte Polyethylen eine Dichte von mindestens 0,959 g/cm³ eine Dichte von 0,959 bis 0,965 g/cm³ aufweist.

7. Blasgeformter Behälter nach einem der Ansprüche 1 bis 6,
dadurch gekennzeichnet, daß das hochdichte Polyethylen mit einer Dichte von 0,951 bis weniger als 0,959 g/cm³ eine Dichte von 0,952 bis 0,955 g/cm³ aufweist.

8. Blasgeformter Behälter nach einem der Ansprüche 1 bis 7,
dadurch gekennzeichnet, daß das Polyethylen mit einer Dichte von mindestens 0,959 g/cm³ eine Dichte von ungefähr 0,963 g/cm³ und einen Schmelzindex von ungefähr 0,3 g pro 10 Minuten aufweist und daß das Polyethylen mit einer Dichte von 0,951 bis weniger als 0,959 g/cm³ eine Dichte von ungefähr 0,93 g/cm³ und einen Schmelzindex von ungefähr 0,28 g pro 10 Minuten aufweist.

9. Behälter nach einem der Ansprüche 1 bis 7,
gekennzeichent durch eine Ausbildung als Bleichbehälter oder als Haushaltsreinigungsbehälter.

## Revendications

1. Récipient moulé par soufflage, formé à partir d'une structure multicouche en polyéthylène comprenant au moins une première et une seconde couches à base de polyéthylène haute densité, dans lequel
la première couche constitue 70 à 90 % en poids de ladite structure et comprend un polyéthylène haute densité dont la densité vaut au moins 0,959 g/cm³ et dont l'indice de fluidité à chaud vaut 10,0 g/10 min ou moins, et
la seconde couche constitue 10 à 30 % en poids de ladite structure et comprend un polyéthylène haute densité dont la densité vaut de 0,951 à moins de 0,959 g/cm³ et dont l'indice de fluidité à chaud vaut 10 g/10 min ou moins.

2. Récipient moulé par soufflage, formé à partir d'une structure multicouche en polyéthylène comprenant au moins une première et une seconde couches à base de polyéthylène haute densité, dans lequel
la première couche constitue 70 à 90 % en poids de ladite structure et se compose de
(a) 60 à 80 % en poids d'un polyéthylène haute densité dont la densité vaut au moins 0,959 g/cm³ et dont l'indice de fluidité à chaud vaut 10 g/10 min ou moins, et
(b) 20 à 40 % en poids d'un matériau mixte en polyéthylène haute densité, comprenant (1) 70 à 90 % en poids d'un polyéthylène haute densité dont la densité vaut au moins 0,959 g/cm³ et dont l'indice de fluidité à chaud vaut environ 10 g/10 min ou moins, et (2) 10 à 30 % en poids d'un polyéthylène haute densité dont la densité vaut de 0,951 à moins de 0,959 g/cm³ et dont l'indice de fluidité à chaud vaut 10 g/10 min ou moins; et
la seconde couche constitue 10 à 30 % en poids de ladite structure et se compose d'un polyéthylène haute densité dont la densité vaut de 0,951 à moins de 0,959 g/cm³ et dont l'indice de fluidité à chaud vaut 10 g/10 min ou moins.

3. Récipient moulé par soufflage selon la revendication 2, dans lequel
la première couche se compose de (a) environ 70 % en poids d'un polyéthylène haute densité dont la densité vaut au moins 0,959 g/cm³ et dont l'indice de fluidité à chaud vaut 10 g/10 min ou moins, et (b) environ 30 % en poids d'un matériau mixte en polyéthylène haute densité comprenant (1) environ 80 % en poids d'un polyéthylène haute densité dont la densité vaut au moins 0,959 g/cm³ et dont l'indice de fluidité à chaud vaut 10 g/10 min ou moins, et (2) 20 % en poids d'un polyéthylène haute densité dont la densité vaut moins de 0,959 g/cm³ et dont l'indice de fluidité à chaud vaut 10 g/10 min ou moins; et
la seconde couche se compose d'un polyéthylène haute densité dont la densité vaut de 0,951 à moins de 0,959 g/cm³ et dont l'indice de fluidité à chaud vaut 10 g/10 min ou moins.

4. Récipient moulé par soufflage selon l'une quelconque des revendications 1 à 3, dans lequel la première couche constitue environ 80 % en poids de ladite structure, et la seconde couche, environ 20 % en poids de ladite structure.

5. Récipient moulé par soufflage formé à partir d'une structure multicouche en polyéthylène comprenant une première et une seconde couches à base de polyéthylène haute densité, dans lequel
la première couche constitue 70 à 90 % en poids de ladite structure et comprend aussi un polyéthylène haute densité dont la densité vaut au moins 0,959 g/cm³ et dont l'indice de fluidité à chaud vaut 10 g/10 min ou moins, et
la seconde couche constitue 10 à 30 % en poids de ladite structure et comprend également un mélange de (a) 60 à 80 % en poids d'un polyéthylène haute densité dont la densité vaut au moins 0,959 g/cm³ et dont l'indice de fluidité à chaud vaut 10 g/10 min ou moins, et (b) 20 % à 40 % en poids d'un polyéthylène haute densité dont la densité vaut de 0,951 à moins de 0,959 g/cm³ et dont l'indice de fluidité à chaud vaut 10 g/10 min ou moins.

6. Récipient moulé par soufflage selon l'une quelconque des revendications 1 à 5, dans lequel le polyéthylène haute densité de densité égale ou supérieure à 0,959 g/cm³ possède une densité de 0,959 à 0,965 g/cm³.

7. Récipient moulé par soufflage selon l'une quelconque des revendications 1 à 6, dans lequel le polyéthylène haute densité de densité comprise entre 0,951 et moins de 0,959 g/cm³ possède une densité de 0,952 à 0,955 g/cm³.

8. Récipient moulé par soufflage selon l'une quelconque des revendications 1 à 7, dans lequel le polyéthylène de densité au moins égale à 0,959 g/cm³ possède une densité d'environ 0,963 g/cm³ et un indice de fluidité à chaud d'environ 0,3 g/10 min, et le polyéthylène de densité comprise entre 0,951 et moins de 0,959 g/cm³ possède une densité d'environ 0,959 g/cm³ et un indice de fluidité à chaud d'environ 0,28 g/10 min.

9. Récipient selon l'une quelconque des revendications 1 à 7, qui est un récipient à lessive ou un récipient pour produit d'entretien.
